# EUROPÄISCHE PATENTANMELDUNG

(11) **EP 2 438 807 A1**
(43) Veröffentlichungstag der Anmeldung: **11.04.2012**
(21) Anmeldenummer: 11182102.1
(22) Anmeldetag: 21.09.2011
(51) Int. Cl.: A01D 46/28, B07B 4/02, B07B 9/00

(54) **Vorrichtung zum Reinigen und Sortieren von kleinteiligem Erntegut**

(30) Priorität: 05.10.2010 AT 16592010
(71) Anmelder: Benczak, Thomas, 7122 Gols (AT)
(72) Erfinder: Benczak, Thomas, 7122 Gols (AT)
(74) Vertreter: Pinter, Rudolf

(57) **Zusammenfassung**

Die Vorrichtung weist Umlenkeinrichtungen (2) und mehrere parallel laufende Endlos-Bänder (1) zur Förderung des Erntegutes auf, welches durch Variation der Abstände der Bänder (1) der Größe nach sortiert wird. Dem Erntegut anhaftende, nicht verwertbare Elemente werden durch Aufbringen einer zielgerichteten Luftströmung auf die austragseitige Umlenkeinrichtung (2) vom Erntegut abgetrennt.

## Beschreibung

Die Erfindung betrifft eine Vorrichtung zum Reinigen und Sortieren von kleinteiligem Erntegut, wie insbesonders Beeren oder Weintrauben, mit einer Zuführeinrichtung für das Erntegut, einer nachgeschalteten Sortiereinrichtung mit mehreren, beabstandet parallel angeordneten, umlaufend zwischen zwei Umlenkeinrichtungen angetriebenen riemenartigen Endlos-Bändern und je einer Austrageinrichtung für die durch die Bänder der Sortiereinrichtung gefallenen Teile einerseits und die auf den Bändern bleibenden Teile andererseits.

Aus FR 2 589 371 A1 bzw.-auch WO 2010/040825 A1 sind entsprechende Vorrichtungen bekannt, die das Reinigen von kleinteiligem Erntegut von mitgesammelten Stengeln, Blattwerk und dergleichen Verunreinigungen erlauben. Nachteilig ist dabei, dass diese Vorrichtungen zur Folge ihrer konstruktiven Auslegung jeweils nur für eine bestimmte Art von Erntegut mit relativ engen Grenzen für die Größenverteilung und relative Anteile von Erntegut einerseits und Verunreinigungen andererseits optimale Reinigungs- bzw. Trennergebnisse liefern.

Aufgabe der vorliegenden Erfindung ist es, Vorrichtungen der eingangs genannten Art so zu verbessern, dass eine Anpassung an unterschiedliches Erntegut bzw. unterschiedliche Zusammensetzungen und Größenverhältnisse von Erntegut einerseits und Verunreinigungen andererseits möglich wird.

Diese Aufgabe wird gemäß der vorliegenden Erfindung dadurch gelöst, dass die Bänder der Sortiereinrichtung in ihrem Abstand zueinander über eine manuell oder motorisch betriebene Verstelleinrichtung verstellbar angeordnet sind und dass die Austrageinrichtung für die auf den Bändern verbleibenden Teile eine Ausblasdüse zur Aufbringung einer zielgerichteten Luftströmung auf die Bänder an der Austragseite der Umlenkeinrichtung, eine Rutsche für das abfallende schwerere Erntegut und eine Fördereinrichtung für die leichteren, abgeblasenen Verunreinigungen aufweist.

Die Vorrichtung besteht aus einem Antrieb, Umlenkeinrichtung und mehreren Riemen zur Förderung des Ernteguts. Das Erntegut wird auf die Riemen aufgebracht und durch Variation der Riemenabstände der Größe nach sortiert. Dem Erntegut anhaftende, nicht verwertbare Elemente (Blätter, Stengel, beschädigtes Erntegut, etc.) werden durch Aufbringen einer zielgerichteten Luftströmung auf eine Umlenkeinrichtung vom Erntegut abgetrennt. Durch diese Vorrichtung wird dieses von den unerwünschten Begleitelementen gereinigt. Die Erfindung nutzt zwei Wirkprinzipien, einerseits die Verwendung von Riemen zum Transport des Erntegutes die gleichzeitig die Funktion eines Siebes erfüllen (durch Variation des Abstandes kann die gewünschte Größenklassierung vorgenommen werden) und andererseits die Umlenkung der Riemen und die dadurch entstehenden Zentrifugalkräfte und das Aufbringen einer Luftströmung, die in Abhängigkeit von den Adhäsionskräften zu einer Abtrennung der unerwünschten Elemente führt.

Die Verstelleinrichtung für die Bänder der Sortiereinrichtung kann in weiterer Ausgestaltung der Erfindung eine in der Höhe verstellbare Rollen- oder Walzenanordnung aufweisen, die an jedem zweiten Band angreift, wobei jedes zweite Band aus der Ebene der verbleibenden Bänder nach oben oder unten abgehoben wird.

In weiterer Ausgestaltung der Erfindung ist die Ausblasdüse spaltförmig ausgebildet und sich über alle Bänder der Sortiereinrichtung erstreckend und bezüglich des Winkels der Luftströmung relativ zu den Bändern verschwenkbar angeordnet.

Die Erfindung wird im Folgenden anhand der Zeichnungen näher erläutert. Fig. 1 zeigt dabei eine schematische Seitenansicht der gesamten Vorrichtung im bestimmungsgemäßen Betrieb und Fig. 2 und 3 zeigen schematisch Möglichkeiten für die Abstandsverstellung der riemenartigen Endlos-Bänder der Sortiereinrichtung.

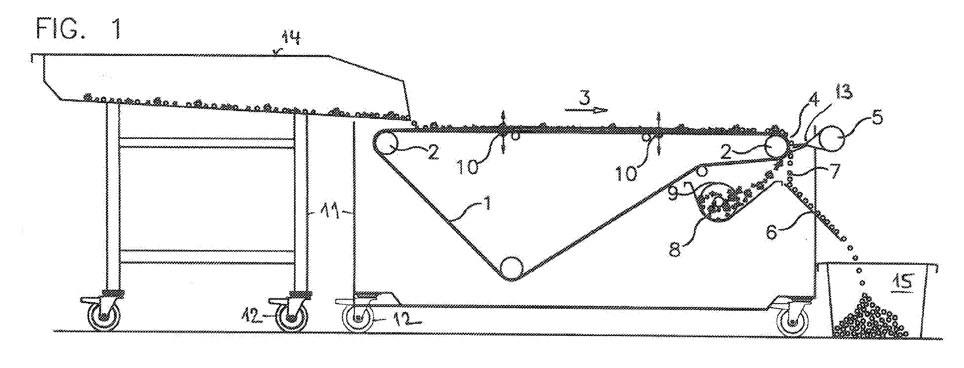

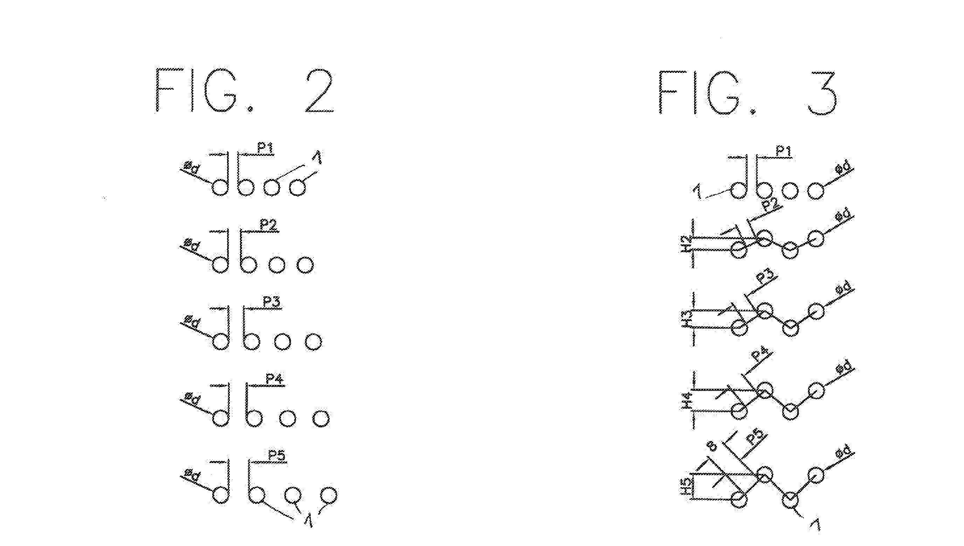

Die Vorrichtung nach Fig. 1 weist einen mittels Rädern 12 verfahrbaren Rahmen 11 auf, der alle nachfolgend beschriebenen Komponenten trägt. Als Wellen mit Nuten ausgebildete Umlenkeinrichtungen 2 führen riemenartige Endlos-Bänder 1, deren seitlicher Abstand (wie zu den Fig. 2 und 3 beschrieben) mithilfe mechanischer Komponenten variiert werden kann. Der nicht weiter dargestellte Antrieb der Vorrichtung erfolgt elektrisch (Elektromotor) oder indirekt mechanisch über eine Transmission. Die Vorrichtung verfügt weiters über ein Gebläse 5 mit angeschlossener Ausblasdüse 13, die Luft zielgerichtet auf die austragseitige Umlenkeinrichtung 2 aufbringt. Weiters hat die Vorrichtung noch ein Austragesystem für das Erntegut und die abgetrennten, nicht verwertbaren Elemente.

Die Sortierung des über die Zuführeinrichtung 14 aufgebrachten Erntegutes erfolgt durch die in ihrem Relativabstand verstellbaren Bänder 1. Die Reinigung erfolgt unter Einwirkung von Luft und durch Zentrifugalkräfte, die an der austragseitigen Umlenkeinrichtung 2 erzeugt werden. Durch Variation der Abstände der Bänder 1 und durch Variation der Bandgeschwindigkeit, der Luftgeschwindigkeit und des Winkels, mit dem die Luft auf die austragseitige Umlenkeinrichtung aufgebracht wird, werden die Effekte der Sortierung und Reinigung erreicht.

Die Bänder 1 bestehen aus einzelnen Schnüren bzw. Riemen, welche um Wellen mit radialen Führungsrillen (Umlenkeinrichtungen 2) geführt werden. Durch den Antrieb dieser Wellen wird das Erntegut waagrecht auf den Bändern 1 gleichmäßig in die Richtung des Pfeiles 3 bewegt und vereinzelt. Am Ende (austragseitige Umlenkeinrichtung 2) des so gebildeten Förderbandes ist über die gesamte Breite einer als Luftklinge wirkende Ausblasdüse 13 angeordnet. Durch den Anpressdruck, der durch die Luft des Gebläses 5 entsteht und durch Adhäsionskräfte bleibt das deformierte, ausgetrocknete oder aufgerissene Erntegut, Stengel und Blätter und dergleichen vorerst an den Bändern 1 und der Umlenkeinrichtung 2 haften. Diese Stengel, Blätter und andere Teile fallen gesondert in eine Wanne 8 und werden durch eine Fördereinrichtung 9 aus der Vorrichtung gefördert. Als Fördereinrichtungen 9 kommen vibrierende Rinnen, Austragschnecken oder Transportbänder in Frage.

Das so gereinigte, gesunde Erntegut 7, das nur eine geringe Berührungsfläche mit den Bändern 1 hat, fällt senkrecht, fast ohne Einfluss des Luftschleiers, auf eine Rutsche 6 und wird in einem Behälter 15 für die Weiterverarbeitung gesammelt.

Die Riemen 1, welche aus verschiedensten Materialien bestehen können und verschiedenste Querschnittsformen und Querschnittsgrößen haben können, wirken als Sieb. Die Abstände der Riemen können je nach Produktgröße beliebig verstellt werden. Fig. 2 zeigt symbolisch die Veränderung des Abstandes von P1 zu P5 durch Änderung des Abstandes der Bänder in einer Ebene und Fig. 3 zeigt symbolisch die bevorzugte Veränderung des Abstandes von P1 zu P5 durch Änderung der Höhe von H2 zu H5 jedes zweiten Bandes. Der gleichbleibende Durchmesser der einzelnen Riemen 1 ist mit d bezeichnet.

Für die Abstandsveränderung können Antriebswellen oder mitlaufende Wellen mit Nuten (10 in Fig. 1) oder Ähnliches dienen, die auch in Zusammenarbeit untereinander die Abstände der Riemen verändern. Unter anderem können bei Varianten der Erfindung auch zwangsgesteuerte oder kinematische Bauelemente wie z.B. Rechen aus verschiedensten Materialien zur Abstandsänderung verwendet werden. Die Verstellbarkeit der Riemen kann auch mit Hilfe von Elektro-, Pneumatik- oder Hydraulikantrieben bzw. mechanischen Stellmechanismen erfolgen.

## Patentansprüche

1. Vorrichtung zum Reinigen und Sortieren von kleinteiligem Erntegut, wie insbesonders Beeren oder Weintrauben, mit einer Zuführeinrichtung (14) für das Erntegut, einer nachgeschalteten Sortiereinrichtung mit mehreren, beabstandet parallel angeordneten, umlaufend zwischen zwei Umlenkeinrichtungen (2) angetriebenen riemenartigen Endlos-Bändern (1) und je einer Austrageinrichtung (6, 8, 9) für die durch die Bänder (1) der Sortiereinrichtung gefallenen Teile einerseits und die auf den Bändern (1) bleibenden Teile andererseits, **dadurch gekennzeichnet, dass** die Bänder (1) der Sortiereinrichtung in ihrem Abstand (P1-P5) zueinander über eine manuell oder motorisch betriebene Verstelleinrichtung verstellbar angeordnet sind und dass die Austrageinrichtung für die auf den Bändern verbleibenden Teile eine Ausblasdüse (13) zur Aufbringung einer zielgerichteten Luftströmung auf die Bänder (1) an der Austragseite der Umlenkeinrichtung (2), eine Rutsche (6) für das abfallende schwerere Erntegut und eine Fördereinrichtung (8, 9) für die leichteren, abgeblasenen Verunreinigungen aufweist.

2. Vorrichtung nach Anspruch 1, **dadurch gekennzeichnet, dass** die Verstelleinrichtung für die Bänder (1) der Sortiereinrichtung eine in der Höhe verstellbare Rollen- oder Walzenanordnung aufweist, die an jedem zweiten Band (1) angreift, wobei jedes zweite Band (1) aus der Ebene der verbleibenden Bänder (1) nach oben oder unten abgehoben wird.

3. Vorrichtung nach Anspruch 1 oder 2, **dadurch gekennzeichnet, dass** die Ausblasdüse (13) spaltförmig ausgebildet ist und sich über alle Bänder (1) der Sortiereinrichtung erstreckend und bezüglich des Winkels der Luftströmung relativ zu den Bändern (1) verschwenkbar angeordnet ist
